(19) Europäisches Patentamt / European Patent Office / Office européen des brevets

(11) **EP 4 230 958 B1**

(12) **FASCICULE DE BREVET EUROPEEN**

(45) Date de publication et mention
de la délivrance du brevet:
**16.04.2025 Bulletin 2025/16**

(21) Numéro de dépôt: **23156727.2**

(22) Date de dépôt: **15.02.2023**

(51) Classification Internationale des Brevets (IPC):
**G01C 17/38** *(2006.01)* **G01C 25/00** *(2006.01)*

(52) Classification Coopérative des Brevets (CPC):
**G01C 17/38; G01C 25/005**

(54) **PROCÉDÉ ET DISPOSITIF DE COMPENSATION DE DÉFAUTS MAGNÉTIQUES VERTICAUX D'UN MAGNÉTOMÈTRE INSTALLÉ DANS UN AÉRONEF**

VERFAHREN UND VORRICHTUNG ZUR KOMPENSATION VON VERTIKALEN MAGNETISCHEN DEFEKTEN EINES IN EINEM FLUGZEUG INSTALLIERTEN MAGNETOMETERS

METHOD AND DEVICE FOR COMPENSATING VERTICAL MAGNETIC DEFECTS OF MAGNETOMETER INSTALLED IN AN AIRCRAFT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **16.02.2022 FR 2201355**

(43) Date de publication de la demande:
**23.08.2023 Bulletin 2023/34**

(73) Titulaire: **THALES**
**92400 Courbevoie (FR)**

(72) Inventeurs:
• **SAHLIGER, Frédéric**
**26000 VALENCE CEDEX (FR)**
• **BOURLAND, Jean-Claude**
**26000 VALENCE CEDEX (FR)**

(74) Mandataire: **Lavoix**
**2, place d'Estienne d'Orves**
**75441 Paris Cedex 09 (FR)**

(56) Documents cités:
**FR-A1- 3 094 082 US-A1- 2018 112 980**

**Description**

La présente invention concerne un procédé et un dispositif de compensation de défauts magnétiques verticaux d'un magnétomètre installé dans un aéronef.

L'invention se situe dans le domaine du pilotage d'aéronef, et plus particulièrement dans le domaine de la détermination du cap d'un aéronef à l'aide de mesures magnétiques.

Dans le domaine du pilotage d'aéronef, de manière connue, un des problèmes qui se pose est le problème de la détermination, avec une bonne précision, du cap de l'aéronef par rapport au cap magnétique, mesuré à l'aide d'un instrument de mesure, par exemple un magnétomètre de secours, installé sur ou dans l'aéronef. L'orientation de l'aéronef dans un référentiel choisi, également appelée attitude de l'aéronef, est définie par des angles de lacet, tangage, roulis. De manière connue, les mesures d'un magnétomètre embarqué sur un véhicule sont perturbées par des champs magnétiques induits par le véhicule. En particulier, les perturbations magnétiques sont dues à la présence de matériaux ferromagnétiques aimantés de manière permanente ou de conducteurs électriques parcourus par des courants établis (également appelés « fers durs ») et des matériaux ferromagnétiques non aimantés ou aimantés de manière réversible (également appelés « fers doux ») conduisant à une erreur en fonction de l'attitude de l'aéronef, des champs induits par des courants de Foucault, des erreurs d'alignement du magnétomètre par rapport au référentiel de l'aéronef (erreurs d'harmonisation). Une compensation des défauts magnétiques induits et une harmonisation des défauts géométriques d'alignement doivent être appliquées pour obtenir des mesures conformes aux performances attendues.

Il existe des méthodes connues dans l'état de la technique qui estiment des valeurs de compensation à appliquer, l'estimation étant basée sur des modèles en 3 dimensions complets des perturbations magnétiques, ce type de méthode d'estimation étant généralement complexe et sensible au bruit de mesure. De plus, les méthodes de ce type nécessitent généralement d'exécuter des manœuvres prescrites, spécifiques, pour obtenir des valeurs de champ magnétique mesurées suffisantes pour effectuer les calculs des valeurs de compensation, ce qui est coûteux et n'est pas souhaitable d'une manière générale.

Le brevet FR 3094082 B1 propose un procédé d'estimation des valeurs d'harmonisation d'un magnétomètre, comportant l'acquisition d'une pluralité de valeurs de vecteurs de champ magnétique mesurées par un magnétomètre correspondant à des positionnements successifs de l'aéronef au sol sur un sol plan incliné de moins de 2°, correspondant à des caps successifs variés. Ce procédé permet d'obtenir des valeurs d'harmonisation géométrique horizontale avec une bonne précision. Lors de cette étape d'harmonisation au sol, la compensation magnétique proche de l'horizontale est également réalisée par des procédés connus de l'homme de l'art.

Lorsque l'aéronef est au sol, les mesures magnétiques sont très peu sensibles aux défauts magnétiques verticaux. Ainsi le fait de travailler dans un plan horizontal ne permet pas d'identifier et de compenser des défauts magnétiques verticaux.

Pourtant dans les conditions de vol et notamment lorsque l'assiette (ou inclinaison longitudinale de l'aéronef) de l'avion n'est pas horizontale, l'erreur de cap liée à ces défauts magnétiques verticaux est significative. Si les défauts magnétiques verticaux ne sont pas dûment identifiés et compensés alors la précision du cap n'atteindra pas les performances attendues d'un magnétomètre de secours en vol.

Les défauts magnétiques verticaux sont observables géométriquement dans une configuration d'assiette s'éloignant de l'horizontale.

L'invention a pour objet de remédier aux inconvénients précités de l'état de la technique, en proposant une estimation des défauts magnétiques verticaux en vol, et une compensation de ces défauts magnétiques verticaux. A cet effet, l'invention propose, selon un aspect, un procédé de compensation de défauts magnétiques verticaux d'un magnétomètre installé dans un aéronef, ledit magnétomètre étant associé à son repère de référence $X_M$, $Y_M$, $Z_M$ et l'aéronef étant associé à son repère d'aéronef $X_A$, $Y_A$, $Z_A$. Ce procédé, mis en œuvre par un processeur d'un dispositif électronique programmable, comporte :

- une première étape d'obtention de premières valeurs de coefficients de compensation de défauts magnétiques du magnétomètre, les coefficients de compensation correspondant aux angles d'Euler associés à une rotation pour passer du repère de référence du magnétomètre au repère d'aéronef,
- une deuxième étape d'affinage comportant l'estimation d'au moins un coefficient de compensation des défauts magnétiques verticaux du magnétomètre, mise en œuvre dans une phase de vol lorsque l'attitude de l'aéronef s'éloigne de l'horizontale, la deuxième étape comprenant :

  - a) une acquisition d'une pluralité de valeurs de vecteurs de champ magnétique mesurées par le magnétomètre en vol et de valeurs d'angles d'attitude de l'aéronef associés,
  - b) un calcul d'un cap magnétique en fonction des premières valeurs de coefficients de compensation issues de la première étape et des valeurs de vecteur de champ magnétique acquises,
  - c) un calcul récursif d'un coefficient, dit coefficient de pente, en fonction d'un écart de cap entre le cap magnétique calculé et un cap magnétique de référence, et de valeurs d'angles d'attitude de l'aéronef,

- d) un calcul d'une valeur de coefficient de compensation de défauts magnétiques verticaux en utilisant un estimateur de biais vertical, mettant en œuvre le coefficient de pente calculé, les valeurs d'angles d'attitude de l'aéronef et des valeurs caractérisantes du champ magnétique terrestre local.

Avantageusement, le procédé de compensation des défauts magnétiques verticaux selon l'invention permet d'affiner des premières valeurs de compensation magnétique obtenues au sol, et notamment d'obtenir et d'affiner une valeur de compensation magnétique verticale.

Le procédé de compensation des défauts magnétiques verticaux selon l'invention peut également présenter une ou plusieurs des caractéristiques ci-dessous, prises indépendamment ou selon toutes les combinaisons techniquement envisageables.

La première étape comporte une estimation au sol de premières valeurs de coefficients de compensation de défauts magnétiques horizontaux du magnétomètre.

La première étape comporte une estimation des premières valeurs de coefficients de compensation de défauts magnétiques par des coefficients de compensation génériques issus d'un modèle prédéfini de défauts magnétiques en fonction d'un type d'aéronef.

Le calcul récursif d'un coefficient de pente est un calcul par moindres carrés récursifs.

Le procédé comporte en outre un calcul de composantes de champ magnétique compensées à partir d'un vecteur de champ magnétique mesuré et des premières valeurs des coefficients de compensation de défauts magnétiques, préalablement au calcul de cap magnétique.

Le procédé comporte en outre une étape de mise à jour de composante verticale de champ magnétique compensée, en fonction de la valeur de coefficient de compensation de défauts magnétiques verticaux calculée.

Les étapes a) à d) de la deuxième étape d'affinage sont itérées, et la valeur de composante verticale de champ magnétique compensée est injectée à une itération suivante du procédé dans l'étape de calcul de composantes de champ magnétique compensé.

Le coefficient de pente est lié à l'écart de cap et aux valeurs d'angles d'attitude de l'aéronef par la formule :

$$\delta\psi\_i = \alpha\_i \cdot (\sin(\psi\_i)\sin(\theta\_i)\cos(\varphi\_i) - \cos(\psi_i)\sin(\varphi\_i))$$

Où i est un indice d'itération, $\alpha\_i$ est le coefficient de pente, $\delta_{\psi\_i}$ est l'écart de cap, $\varphi\_i$, $\theta\_i$, $\psi\_i$, sont les angles d'attitude de l'aéronef, respectivement de roulis, de tangage et de lacet.

Un estimateur de biais vertical est calculé, pour l'itération d'indice i, selon la formule :

$$\Delta\hat{H}_{Z\_i} = \frac{-H_{0m_i} \cdot \cos(I\_i) \cdot \alpha\_i}{1 - \alpha\_i \cdot (\sin(\psi_i) \cdot \sin(\varphi_i) + \cos(\psi\_i) \cdot \sin(\theta\_i) \cdot \cos(\varphi\_i))}$$

Où $\Delta\hat{H}_{Z\_i}$ est ledit estimateur de biais vertical, $H_{0m\_i}$ est la norme du champ magnétique terrestre local mesuré, $I\_i$ est l'inclinaison du champ magnétique terrestre en radian, $\alpha\_i$ est le coefficient de pente et $\varphi\_i$, $\theta\_i$, $\psi\_i$, sont les angles d'attitude de l'aéronef, respectivement de roulis, de tangage et de lacet.

L'aéronef suivant une trajectoire dans la phase de vol, le procédé met en œuvre un critère géométrique d'observabilité combinant un cumul d'écart d'un angle solide en tangage et roulis et une variation de cap dans la trajectoire, la satisfaction du critère géométrique d'observabilité permettant de définir une condition de mise en œuvre en vol de l'estimation d'au moins un coefficient de compensation de défauts magnétiques verticaux dans une phase d'observabilité appropriée.

Selon un autre aspect, l'invention concerne un dispositif de compensation des défauts magnétiques verticaux d'un magnétomètre installé dans un aéronef, ledit magnétomètre étant associé à son repère de référence $X_M$, $Y_M$, $Z_M$ et l'aéronef étant associé à son repère d'aéronef $X_A$, $Y_A$, $Z_A$. le dispositif comporte un processeur configuré pour mettre en œuvre :

- un module d'obtention de premières valeurs de coefficients de compensation de défauts magnétiques du magnétomètre, les coefficients de compensation correspondant aux angles d'Euler associés à une rotation pour passer du repère de référence du magnétomètre au repère d'aéronef,
- un ensemble de modules, mis en œuvre dans une phase de vol lorsque l'attitude de l'aéronef s'éloigne de l'horizontale, configuré pour mettre en œuvre un affinage comportant l'estimation d'au moins un coefficient de compensation des défauts magnétiques verticaux du magnétomètre, comprenant :

  - un module d'acquisition d'une pluralité de valeurs de vecteurs de champ magnétique mesurées par le magnétomètre en vol et de valeurs d'angles d'attitude de l'aéronef associés,

- un module de calcul d'un cap magnétique en fonction des premières valeurs de coefficients de compensation issues de la première étape et de valeurs de vecteur de champ magnétique acquises,
- un module de calcul récursif d'un coefficient, dit coefficient de pente, en fonction d'un écart de cap entre le cap magnétique calculé et un cap magnétique de référence, et de valeurs d'angles d'attitude de l'aéronef,
- un module de calcul d'une valeur de coefficient de compensation de défauts magnétiques verticaux en utilisant un estimateur de biais vertical, mettant en œuvre le coefficient de pente calculé, les valeurs d'angles d'attitude de l'aéronef et des valeurs caractérisantes du champ magnétique terrestre local.

Selon un autre aspect, l'invention concerne un programme d'ordinateur comportant des instructions logicielles qui, lorsqu'elles sont exécutées par un dispositif électronique programmable, mettent en œuvre un procédé de compensation des défauts magnétiques verticaux d'un magnétomètre tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 représenté schématiquement un aéronef muni d'un magnétomètre et les référentiels associés respectifs ;

[Fig 2] la figure 2 représente schématiquement un système de détermination de cap d'un aéronef comportant un dispositif de compensation des défauts magnétiques verticaux selon un mode de réalisation ;

[Fig 3] la figure 3 est un organigramme des principales étapes d'un procédé de compensation des défauts magnétiques verticaux d'un magnétomètre selon un mode de réalisation de l'invention ;

[Fig 4] la figure 4 est un organigramme des principales étapes d'un procédé d'affinage de composantes de champ par estimation récursive en vol.

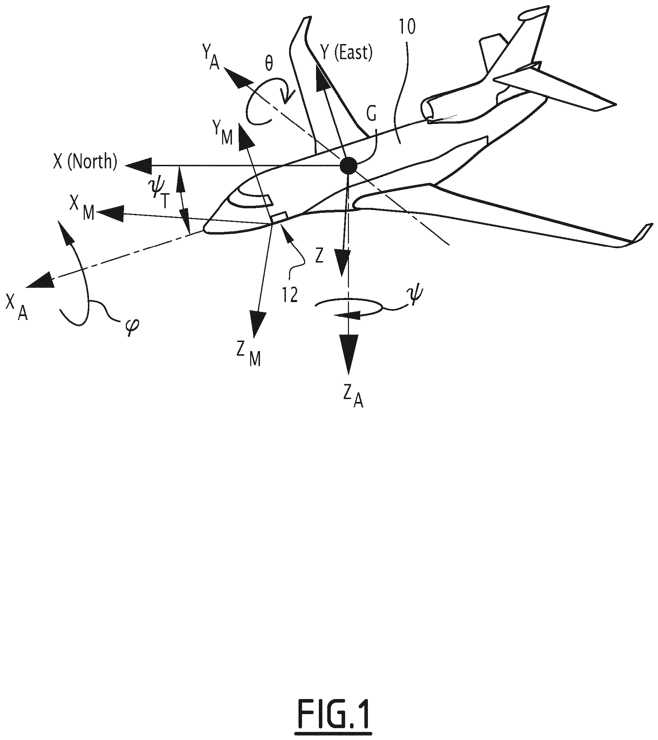

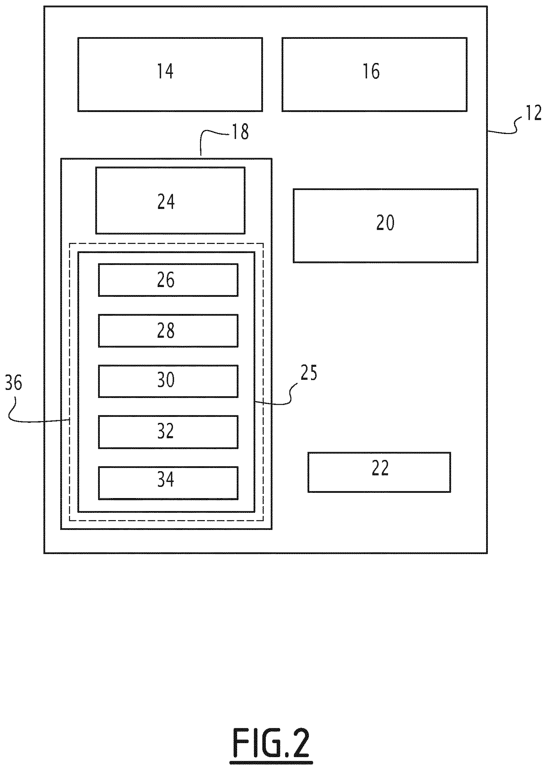

La figure 1 illustre schématiquement un aéronef 10 muni d'un système de détermination de cap 12, représenté schématiquement à la figure 2.

L'aéronef 10 a un repère d'aéronef TA, d'origine G, qui est un point de référence, par exemple son centre de gravité ou tout autre point de référence de sa structure. Le repère d'aéronef comporte trois axes $X_A$, $Y_A$, $Z_A$ qui sont perpendiculaires entre eux, l'axe $X_A$ étant l'axe longitudinal de l'aéronef, orienté vers le nez de l'aéronef. Cet axe longitudinal de l'aéronef est également appelée ligne de foi de l'aéronef. L'axe $Y_A$ est perpendiculaire à $X_A$, dans le plan horizontal lorsque l'aéronef est posé sur le sol, c'est l'axe qui relie les ailes, orienté vers l'aile droite. L'axe $Z_A$ est l'axe vertical lorsque l'aéronef est posé au sol, dirigé vers le bas. Le repère d'aéronef TA est lié à l'aéronef.

L'attitude de l'aéronef lorsqu'il est en mouvement est définie par rapport à un repère géographique TGL (Trièdre Géographique Local également appelé NorthEastDown), qui est représenté à la figure 1 avec un même centre que le centre G du repère d'aéronef. Ce repère TGL comprend 3 axes X, Y, Z perpendiculaires deux à deux, l'axe X pointant vers le Nord Géographique (« North » en anglais), l'axe Y pointant vers l'Est Géographique (« East » en anglais), et l'axe Z définissant la direction verticale, pointant vers le centre de la Terre (« Down » en anglais).

L'attitude de l'aéronef par rapport au repère géographique TGL, est définie, de manière connue, par trois angles d'Euler permettant de passer du repère TGL au repère TA de l'aéronef, qui sont respectivement le lacet $\psi$ (en anglais « yaw »), le tangage $\theta$ (en anglais « pitch ») et le roulis $\varphi$ (en anglais « roll »). Ces angles sont représentés à la figure 1.

Le lacet $\psi$ correspond à une rotation de l'aéronef autour de $Z_A$.

Le lacet $\Psi_T$, également appelé cap géographique, représenté sur la figure 1, est l'angle entre l'axe $X_A$ et l'axe X, correspondant à une rotation de l'aéronef autour de $Z_A$. Le tangage représente la rotation autour de l'axe $Y_A$, et le roulis la rotation autour de l'axe longitudinal $X_A$. Ces angles définissent la matrice de changement de repère, du repère TGL de référence vers le repère TA de l'aéronef.

Les angles $\varphi$ et $\psi$ sont définis dans $]-\pi,+\pi]$, et $\theta$ est défini dans $]-\pi/2,\pi/2[$.

L'attitude de l'aéronef 10 est obtenue par le changement de repère du repère TGL vers le repère TA, en utilisant la matrice $B(\psi,\theta,\varphi)$, dite matrice des cosinus directeurs :

[MATH 1]

$$B(\psi, \theta, \varphi)$$
$$= \begin{bmatrix} \cos\psi\cos\theta & -\sin\psi\cos\varphi + \cos\psi\sin\theta\sin\varphi & \sin\psi\sin\varphi + \cos\psi\sin\theta\cos\varphi \\ \sin\psi\sin\theta & \cos\psi\cos\varphi + \sin\psi\sin\theta\sin\varphi & -\cos\psi\sin\varphi + \sin\psi\sin\theta\cos\varphi \\ -\sin\theta & \cos\theta\sin\varphi & \cos\theta\cos\varphi \end{bmatrix}$$

Le système de détermination de cap 12, représenté schématiquement à la figure 2, comporte un magnétomètre 14, une unité de mesure inertielle 16, un dispositif de traitement 18 et une interface homme-machine 20.

Ce système de détermination de cap 12 comprend également un instrument 22 appelé « stand-by attitude » (unité fournissant les attitudes de secours), adapté pour obtenir et afficher au pilote les attitudes de l'avion.

Le magnétomètre 14 est un instrument adapté pour fournir des valeurs d'un champ magnétique mesuré, permettant notamment d'indiquer la direction du Nord magnétique. Un magnétomètre a un repère de référence propre TMAG, représenté schématiquement à la figure 1, ayant une origine $O_M$ et des axes $X_M$, $Y_M$, $Z_M$ perpendiculaires entre eux. Le magnétomètre fournit, à chaque mesure, des composantes $H_{xm}$, $H_{ym}$, $H_{zm}$ formant un vecteur tridimensionnel $[H_m]$.

L'angle de lacet $\Psi_{mag}$ entre l'axe $X_A$ (axe longitudinal de l'avion) et l'axe $X_m$ est le cap magnétique selon la mesure du magnétomètre. Comme indiqué en introduction, les mesures du magnétomètre sont perturbées par des défauts magnétiques locaux, par exemple des champs magnétiques induits par l'aéronef.

L'unité de mesure inertielle (UMI) 16 comporte de façon usuelle trois accéléromètres et trois gyromètres, et détermine les angles d'attitude de l'aéronef 10 dans le repère TGL.

Selon une variante, le système de détermination de cap 12 comprend un autre dispositif de détermination de position et d'orientation, par exemple une unité de navigation primaire ou un cap GPS bi-antenne, qui fournit des angles d'attitude de l'aéronef en temps réel à l'unité de traitement 18.

Par la suite, on appellera « angles d'attitude » de l'aéronef les angles de lacet, tangage, roulis fournis par l'unité de mesure inertielle 16 ou tout autre dispositif analogue, désignés par le terme « centrale inertielle primaire ».

Selon une autre variante, appelée mode de configuration « autonome », le système de détermination de cap 12 est seulement muni d'un magnétomètre, sans comporter de centrale inertielle primaire.

Le dispositif de traitement 18 est un dispositif électronique programmable, et comprend une unité centrale de traitement (CPU) 24, e.g. un processeur, apte à exécuter des instructions de programme informatique lorsque le dispositif 18 est mis sous tension, et une unité de mémoire électronique 25, par exemple des registres, l'unité de mémoire électronique 25 étant adaptée à stocker des instructions de code exécutable permettant la mise en œuvre de programmes comportant des instructions de code aptes à mettre en œuvre le procédé selon l'invention. Ainsi, le dispositif de traitement 18 est un dispositif de compensation des défauts magnétiques verticaux d'un magnétomètre selon l'invention.

Le dispositif de traitement 18 est adapté pour communiquer avec l'interface homme-machine 20, pour recevoir des commandes et afficher des résultats, par exemple au moyen d'un bus de communication (non représenté).

L'unité de mémoire électronique 25 est configurée pour stocker :

- un module 26 d'obtention de premières valeurs de coefficients de compensation de défauts magnétiques ;
- un ensemble de modules, mis en œuvre dans une phase de vol, configuré pour mettre en œuvre un affinage comportant l'estimation d'au moins un coefficient de compensation des défauts magnétiques verticaux du magnétomètre, comprenant :

  - un module 28 d'acquisition d'une pluralité de valeurs de vecteurs de champ magnétique mesurées par le magnétomètre 14 en vol et de valeurs d'angles d'attitude de l'aéronef fournies associés ;
  - un module 30 de calcul d'un cap magnétique en fonction des premières valeurs des coefficients de compensation et de valeurs de vecteur de champ magnétique acquises,;
  - un module 32 de calcul récursif d'un coefficient, dit coefficient de pente, en fonction d'un écart entre le cap magnétique et un cap magnétique de référence et de valeurs d'angles d'attitude de l'aéronef
  - un module 34 de calcul d'une valeur de coefficient de compensation de défauts magnétiques verticaux, mettant en œuvre le coefficient de pente calculé, des valeurs d'angles d'attitude de l'aéronef et des valeurs caractérisantes du champ magnétique terrestre local.

Les modules sont mis en œuvre en phase de vol, lorsque l'attitude de l'aéronef s'éloigne de l'horizontale, par exemple lorsque l'inclinaison longitudinale de l'aéronef par rapport au plan horizontal est supérieure, en valeur absolue, à 10°, en particulier supérieure à 25°.

Dans un mode de réalisation, les modules 26, 28, 30, 32, 34 sont réalisés sous forme d'instructions logicielles formant un programme d'ordinateur 36, qui, lorsqu'il est exécuté par un dispositif électronique programmable, met en œuvre un procédé de compensation des défauts magnétiques verticaux d'un magnétomètre selon l'invention.

En variante non représentée, les modules 26, 28, 30, 32, 34 sont réalisés chacun (ou une partie d'entre eux) sous forme d'un composant logique programmable, tel qu'un FPGA (de l'anglais *Field Programmable Gate Array*), un GPU (processeur graphique) ou un GPGPU (de l'anglais *General-purpose processing on graphics processing*), ou encore sous forme d'un circuit intégré dédié, tel qu'un ASIC (de l'anglais *Application Specific Integrated Circuit*).

Le programme d'ordinateur 36 comportant des instructions logicielles est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

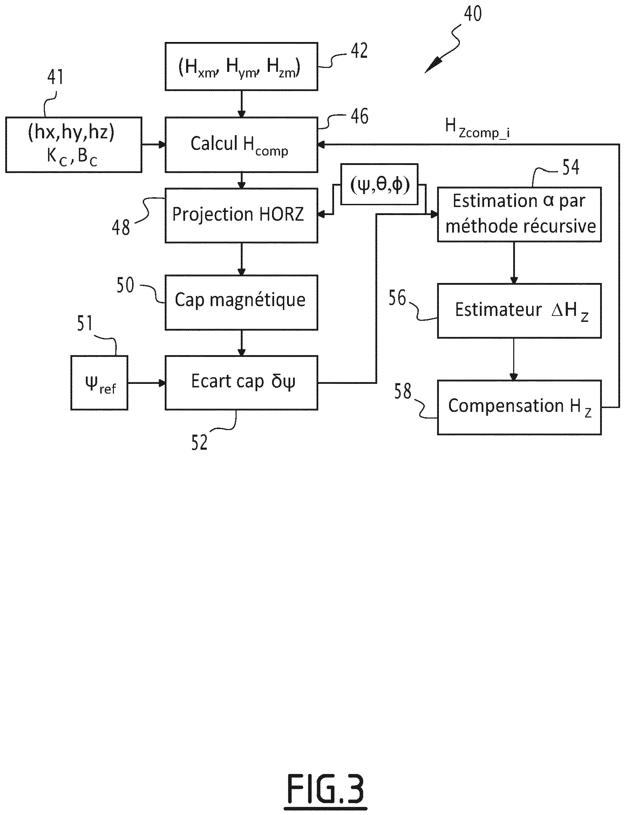

La figure 3 est un synoptique des principales étapes d'un procédé de compensation des défauts magnétiques verticaux d'un magnétomètre, mis en œuvre par un dispositif de traitement 18, selon un mode de réalisation.

Le procédé réalise une estimation et un affinage en vol des coefficients de compensation des défauts magnétiques verticaux, en utilisant des données préétablies, au sol ou en usine.

Le procédé comporte une étape 41 d'obtention des premières valeurs de coefficients de compensation de défauts magnétiques.

Un modèle général de compensation de champ magnétique mesuré dans le repère TMAG s'écrit :

[MATH 2]

$$\begin{bmatrix} H_{xt} \\ H_{yt} \\ H_{zt} \end{bmatrix} = \begin{bmatrix} K_{cxx} & K_{cxy} & K_{cxz} \\ K_{cyx} & K_{cyy} & K_{cyz} \\ K_{czx} & K_{czy} & K_{czz} \end{bmatrix} \begin{bmatrix} H_{xm} + B_{cx} \\ H_{ym} + B_{cy} \\ H_{zm} + B_{cz} \end{bmatrix}$$

$$\overrightarrow{Bc} = \begin{bmatrix} B_{cx} \\ B_{cy} \\ B_{cz} \end{bmatrix} \qquad\qquad [K_c] = \begin{bmatrix} K_{cxx} & K_{cxy} & K_{cxz} \\ K_{cyx} & K_{cyy} & K_{cyz} \\ K_{czx} & K_{czy} & K_{czz} \end{bmatrix}$$

Avec $\overrightarrow{Bc} = \begin{bmatrix} B_{cx} \\ B_{cy} \\ B_{cz} \end{bmatrix}$ le vecteur de compensation de fers durs et $[K_c]$ la matrice de compensation des fers doux.

Le vecteur $\overrightarrow{H_t}$ est le vecteur du champ magnétique théorique exprimé dans le repère TA, et $\overrightarrow{H_m}$ est le vecteur de champ magnétique mesuré par le magnétomètre, exprimé dans le repère TMAG.

Les premières valeurs de coefficients de compensation de défauts magnétiques sont des premières valeurs respectivement de $[K_c]$ et de $\overrightarrow{B_c}$.

Selon un premier mode de réalisation, il s'agit de valeurs de coefficients de compensation de défauts magnétiques horizontaux, obtenues de préférence par un procédé mis en œuvre sur des manœuvres effectuées au sol tel que décrit dans le brevet FR3094082 B1.

Dans ce premier mode de réalisation, les composantes verticales sont nulles :

$$\overrightarrow{Bc} = \begin{bmatrix} B_{cx} \\ B_{cy} \\ 0 \end{bmatrix}$$

$$[K_c] = \begin{bmatrix} K_{cxx} & K_{cxy} & 0 \\ K_{cyx} & K_{cyy} & 0 \\ 0 & 0 & 1 \end{bmatrix}$$

Selon un deuxième mode de réalisation, les premières valeurs de coefficients de défauts magnétiques horizontaux et verticaux sont de premières approximations génériques, obtenues à partir d'un modèle prédéfini de défaut magnétiques en usine, par type d'aéronef.

Dans ce cas, des premières valeurs de coefficients de compensation en trois dimensions sont obtenues, respectivement pour la matrice $[K_c]$ et le vecteur $\overrightarrow{B_c}$.

De plus, de premières valeurs d'harmonisation des défauts d'alignement du magnétomètre avec les axes de l'avion, également appelés défauts géométriques, sont obtenues à l'étape 41, soit par un procédé mis en œuvre sur des manœuvres effectuées au sol, soit à partir d'un modèle d'usine.

De préférence, pour les défauts géométriques, le procédé d'estimation de valeurs d'harmonisation décrit dans le brevet FR3094082B1. Ce procédé permet une estimation au sol de valeurs d'harmonisation horizontales hx, hy, où hx correspond à l'angle d'Euler associé à la rotation autour de $X_A$, et hy correspond à l'angle d'Euler associé à la rotation autour de $Y_A$ pour passer du repère de référence $X_M$, $Y_M$, $Z_M$ du magnétomètre au repère avion $X_A$, $Y_A$, $Z_A$. Ce procédé d'estimation de valeurs d'harmonisation permet d'obtenir, pour les valeurs d'harmonisation horizontales, une précision de l'ordre de 0,5° en regard de défauts de fers doux faibles sur l'aéronef. De plus, une estimation par calcul de valeur d'harmonisation verticale hz est décrite, cette valeur hz estimée étant néanmoins entachée d'erreurs.

De préférence, le procédé de compensation de défauts magnétiques verticaux comporte une deuxième étape d'affinage comportant l'estimation d'au moins un coefficient de compensation des défauts magnétiques verticaux du magnétomètre, mise en œuvre dans une phase de vol, la deuxième étape comprenant les sous-étapes 42 à 58 décrites ci-dessous. Les étapes 42 à 58 sont mises en œuvre itérativement, chaque itération ayant un indice i associé, i étant égal à 1 lors de la première itération, et étant incrémenté de 1 à chaque itération.

Le procédé comporte une étape 42 d'acquisition des composantes $H_{mx\_i}$, $H_{my\_i}$ ; $H_{mz\_i}$, formant un vecteur tridimensionnel $\overrightarrow{H_{m\_i}}$, représentant les valeurs du champ magnétique mesurées par le magnétomètre solidaire de l'aéronef, pendant la phase de vol.

Par exemple, les valeurs de champs magnétique sont mesurées à une cadence donnée, par exemples de 60Hz, de manière à obtenir des mesures en vol à plusieurs pas de temps et plusieurs valeurs d'assiette. Ces mesures de champ magnétique (des vecteurs en trois dimensions, mesurées dans le repère du magnétomètre) sont enregistrées chacune en correspondance avec l'attitude correspondante de l'aéronef 10 telle que délivrée par l'Unité de Mesure Inertielle 16.

Une compensation 46 permet d'obtenir un vecteur $[H_{comp\_i}]$ de composantes $H_{Xcomp\_i}$, $H_{Ycomp\_i}$, $H_{Zcomp\_i}$ compensées à partir d'un vecteur de champ magnétique mesuré $\overrightarrow{H_{m\_i}}$, des premières valeurs des coefficients de compensations de défauts magnétiques, $[K_c]$, $\overrightarrow{B_c}$ et des premières valeurs d'harmonisation hx, hy, hz, par une méthode de calcul connue de l'homme du métier.

Des vecteurs de composantes $H_{Xcomp\_i}$, $H_{Ycomp\_i}$, $H_{Zcomp\_i}$ compensées sont calculées et stockées pour chaque vecteur de valeurs du champ magnétique mesuré.

Le procédé comprend ensuite une étape de projection 48 du vecteur $H_{comp\_i}$ pour obtenir un vecteur de projection horizontal noté $[H_{HORZ\_i}]$, ayant des composantes $H_{XH\_i}$, $H_{YH\_i}$, $H_{ZH\_i}$ par application d'une matrice de projection $B_{HORZ}$, correspondant à $B(0,\theta,\varphi)$ définie par l'équation [MATH 1]. La matrice de projection est définie par :

[MATH 3]

$$B_{HORZ} = \begin{bmatrix} \cos(\theta) & \sin(\theta)\sin(\varphi) & \sin(\theta)\cos(\varphi) \\ 0 & \cos(\varphi) & -\sin(\varphi) \\ -\sin(\theta) & \cos(\theta)\sin(\varphi) & \cos(\theta)\cos(\varphi) \end{bmatrix}$$

De manière analogue à ce qui a été décrit ci-dessus, les angles $\theta,\varphi$ évoluent également avec l'indice i de l'itération, ce qui permet d'obtenir une matrice $B_{HORZ\_i}$ à la ième itération.

Ainsi, les composants $H_{XH\_i}$, $X_{YH\_i}$, $H_{ZH\_i}$ sont obtenues, à la ième itération, par :

[MATH4]

$$\begin{bmatrix} H_{XH\_i} \\ H_{YH\_i} \\ H_{ZH\_i} \end{bmatrix} = B_{HORZ\_i} \cdot \begin{bmatrix} H_{Xcomp\_i} \\ H_{Ycomp\_i} \\ H_{Zcomp\_i} \end{bmatrix}$$

Les valeurs angulaires de tangage $\theta$ et de roulis $\varphi$ utilisées dans la matrice $B_{HORZ}$ sont fournies par exemple par l'unité inertielle UMI, et plus généralement par une centrale inertielle primaire.

Le procédé comporte par la suite une opération 50 de calcul de cap magnétique estimé $\psi_{mag\_i}$, calculé à la ième itération par la formule suivante :

[MATH 5]

$$\psi_{mag\_i} = -\text{atan}\left(\frac{H_{XH\_i}}{H_{YH\_i}}\right)$$

Un cap magnétique de référence $\psi_{ref}$ est fourni à l'étape 51, soit par une centrale primaire de navigation, soit par calcul en configuration autonome.

Par exemple, la centrale primaire de navigation utilise un gyromètre de précision qui capte la rotation terrestre et détermine le cap géographique, puis calcule le cap magnétique de référence par compensation de la déclinaison magnétique et d'un modèle cartographique terrestre.

Dans une configuration autonome, le calcul du cap magnétique de référence utilise des valeurs de coefficients de compensation calculées à l'étape 41 et des mesures obtenues à l'étape 42. Les mesures obtenues à l'étape 42, à plusieurs pas de temps et plusieurs valeurs d'assiette, vont servir à calculer des coefficients de compensation magnétiques verticaux, pour une meilleure compensation globale des champs mesurés et ainsi obtenir une meilleure précision du cap magnétique calculé, même pour des assiettes non horizontales.

L'écart de cap $\delta\psi\_i$ entre le cap magnétique estimé $\psi_{mag\_i}$ et le cap magnétique de référence $\psi_{ref\_i}$ est calculé à l'étape 52 d'estimation d'écart de cap magnétique. Les angles $\psi_{mag\_i}$, $\psi_{ref\_i}$ sont exprimés en radian.

L'écart de cap est calculé par :

[MATH 6]

$$\delta\psi\_i = \psi_{mag\_i} - \psi_{ref\_i}$$

L'écart $\delta\Psi\_i$ calculé, ainsi que les valeurs d'angles d'attitude de l'aéronef sont mis en œuvre dans un calcul récursif 54 d'un coefficient de pente, noté $\alpha\_i$.

La formule suivante est appliquée, cette formule explicitant la loi entre l'écart de cap magnétique et les angles d'attitude de l'aéronef :

[MATH 7]

$$\delta\psi\_i = \alpha\_i \cdot (\sin(\psi\_i)\sin(\theta\_i)\cos(\varphi\_i) - \cos(\psi_i)\sin(\varphi\_i))$$

Dans un mode de réalisation, le coefficient de pente $\alpha\_i$ est estimé par l'application d'une méthode des moindres carrés récursifs. En variante, un filtrage de Kalman est utilisé pour l'estimation du coefficient de pente.

Plus généralement, le coefficient de pente est estimé par une méthode d'estimation récursive tout méthode d'estimation récursive connues étant applicable.

Cette méthode d'estimative récursive est appliquée itérativement sur une pluralité de valeurs mesurées d'angles d'attitude de l'aéronef dans une phase de vol, de préférence en phase de décollage, ce qui permet d'obtenir une variété de positions/orientations de l'aéronef. En effet, en phase de décollage, l'aéronef est piloté pour monter et effectuer au moins un virage.

Par exemple, les mesures d'attitude sont effectuées avec une fréquence de 60 Hz, et pour chaque mesure d'angles d'attitude de l'aéronef, l'écart de cap magnétique $\delta\Psi\_i$ correspondant est estimé.

Par exemple, le coefficient de pente $\alpha\_i$ est estimé sur 180° de cap, 30° de roulis et 15° de tangage.

Le coefficient de pente $\alpha\_i$ est utilisé dans l'estimation 56 d'une valeur de coefficient de compensation de défauts magnétiques verticaux, $\Delta\hat{H}_{Z\_i}$, également appelé biais vertical, en appliquant l'estimateur donné par la formule suivante, mise au point par les inventeurs :

[MATH 8]

$$\Delta\hat{H}_{Z\_i} = \frac{-H_{0m\_i} \cdot \cos(I\_i) \cdot \alpha\_i}{1 - \alpha\_i \cdot (\sin(\psi_i) \cdot \sin(\varphi_i) + \cos(\psi\_i) \cdot \sin(\theta\_i) \cdot \cos(\varphi\_i))}$$

Où $H_{0m\_i}$ est la norme du champ magnétique terrestre local mesuré, dont la formule est, de manière connue :

[MATH 9]

$$H_{0m\_i} = \sqrt{H_{xm\_i}^2 + H_{ym\_i}^2 + H_{zm\_i}^2}$$

Les composantes [$H_{xm\_i}$, $H_{ym\_i}$, $H_{zm\_i}$] sont fournies par le magnétomètre, et $I\_i$ est l'inclinaison du champ magnétique terrestre en radian, estimée par la formule :

[MATH 10]

$$I\_i = -atan\left(\frac{H_{ZH\_i}}{\sqrt{H_{XH\_i}^2 + H_{YH\_i}^2}}\right)$$

Dans la formule [MATH 8], les valeurs de champ magnétique $H_{0m\_i}$, $\Delta\hat{H}_{Z\_i}$ sont exprimées en nT (nano Tesla), et les valeurs angulaires en radian.

Avantageusement, la formule [MATH 8] permet de calculer une valeur de coefficient de compensation sans nécessiter la connaissance du champ magnétique terrestre théorique, mais uniquement des valeurs de champ magnétique terrestre local mesuré, des angles d'attitude, du cap et du coefficient de pente $\alpha\_i$.

Avantageusement, le coefficient de pente $\alpha\_i$ est estimé par une méthode calculatoire, et affiné récursivement en temps réel.

Dans un mode de réalisation, l'étape 56 d'estimation d'une valeur de coefficient de compensation est suivie d'une étape 58 de mise à jour ou affinage de la composante verticale de champ magnétique affinée, permettant d'obtenir une composante verticale de champ magnétique compensée à l'itération courante :

[MATH 11]

$$H_{Zcomp\_i} = H_{Zcomp_{i-1}} + \Delta \hat{H}_{Z\_i}$$

Où i est un entier indiquant un indice d'itération courante, (i-1) indiquant l'itération précédente.

Le procédé permet d'obtenir des deuxièmes valeurs de coefficients de compensation des défauts magnétomètre, comportant notamment la valeur $\Delta \hat{H}_Z$ de coefficient de compensation de défauts magnétiques verticaux, en particulier de fer dur vertical.

Les étapes 42 à 58 sont itérées en remplaçant la composante verticale du vecteur [Hcomp] par la valeur $H_{Zcomp\_i}$ de composante verticale de champ magnétique compensé à l'itération courante calculée par la formule [MATH 11], pour un nombre d'itérations choisi ou jusqu'à ce qu'un critère d'arrêt des itérations soit vérifié.

Par exemple, un critère d'arrêt est vérifié si la variation du coefficient $\Delta \hat{H}_{Z\_i}$ entre deux itérations successives est inférieure à un seuil prédéterminé, par exemple la variation entre la (i-1)ème itération et la ième itération est exprimée par : $| \Delta \hat{H}_{Z_i} - \Delta \hat{H}_{Z(i-1)}|$..

Par exemple, le seuil prédéterminé est compris entre 30 et 70 nT. Selon une alternative simplifiée, le nombre d'itérations est prédéterminé.

Dans un mode de réalisation, le critère d'arrêt vérifie également un critère dit critère géométrique d'observabilité, qui permet d'assurer que suffisamment de manœuvres distinctes sont effectuées, puis, une fois le critère d'observabilité validé, le critère de variation du coefficient $\Delta \hat{H}_{Z\_i}$ explicité ci-dessus est mis en œuvre.

Dans un mode de réalisation, l'aéronef suivant une trajectoire dans la phase de vol, le critère géométrique d'observabilité combinant un cumul d'écart d'un angle solide en tangage et/ou roulis et une variation de cap dans la trajectoire, la satisfaction du critère géométrique d'observabilité permettant de définir une condition de mise en œuvre en vol de l'estimation d'au moins un coefficient de compensation de défauts magnétiques verticaux dans une phase d'observabilité appropriée.

Par exemple le critère géométrique d'observabilité est calculé itérativement par intégration (ou cumul de l'assiette) indiquant l'angle solide parcouru dans les dimensions $\varphi$ et $\theta$, et la variation de cap $\Psi$. La condition consiste par exemple à comparer la valeur du cumul à un premier seuil bas et à un deuxième seuil haut, l'arrêt de la mise en œuvre de l'estimation étant effectué si la valeur du cumul est inférieure au premier seuil bas ou supérieure au deuxième seuil haut.

Avantageusement, l'invention propose un affinage incrémental en vol, par une méthode simplifiée, plus robuste qu'un modèle tridimensionnel complet d'estimation des composantes d'harmonisation.

Avantageusement, le procédé proposé permet d'obtenir une compensation de défauts magnétiques verticaux avec une bonne précision et avec une charge calculatoire faible.

Avantageusement, le procédé de compensation des défauts magnétiques verticaux d'un magnétomètre est mis en œuvre dans une phase de vol, par exemple en début de vol après décollage et premiers virages, sans nécessiter une mise en œuvre de manœuvres imposées et un espace aérien large.

Dans une configuration, le procédé ne nécessite pas de référence précise de cap magnétique, permettant une application à des aéronefs ne disposant pas de référence précise de cap magnétique (fournie par une centrale primaire ou un modèle magnétique), ou permettant de renforcer l'autonomie d'un magnétomètre de secours.

Dans une autre configuration, le procédé de compensation des défauts magnétiques verticaux utilise des premières valeurs de compensation à partir de coeffici ents de compensation génériques issus d'un modèle prédéfini, par exemple en usine, pour chaque type d'aéronef. Cela rend inutile la compensation préalable au sol sur aire de compensation dédiée pour chaque exemplaire d'aéronef d'un même type apportant ainsi un gain économique en maintenance.

Le principe d'estimation itérative explicité ci-dessus s'applique pour l'affinage de composantes de champ par estimation récursive (ou incrémentale) en vol.

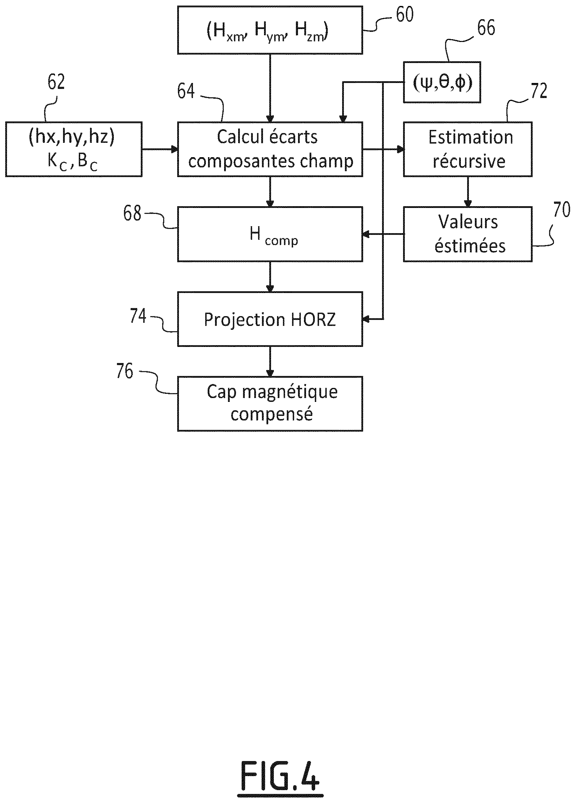

Un mode de réalisation d'un procédé d'affinage des composantes de champ par estimation récursive est décrit ci-après en référence à la figure 4.

Le procédé comprend une étape 60 d'acquisition d'une pluralité de valeurs de vecteurs de champ magnétique mesurées par le magnétomètre en vol et de valeurs d'angles d'attitude de l'aéronef associés, analogue à l'étape 42 précédemment décrite.

Cela permet l'acquisition des composantes $H_{mx\_i}$, $H_{my\_i}$ ; $H_{mz\_i}$, formant un vecteur tridimensionnel $\overrightarrow{H_{m\_i}}$ représentant les valeurs du champ magnétique mesurées par le magnétomètre solidaire de l'aéronef, pendant la phase de vol.

Le procédé comprend une étape 62 d'obtention de premières valeurs de coefficients de compensation de défauts magnétiques du magnétomètre, ces premières valeurs étant obtenues au sol, comme expliqué ci-dessus en référence à l'étape 41 ou étant prédéfinies en fonction du type d'aéronef (modèle d'usine).

Lors d'une étape 64, le calcul d'un écart de composantes de champ est effectué, en prenant en compte des valeurs angulaires de tangage $\theta$ et de roulis $\varphi$, et optionnellement de lacet $\psi$, fournies (étape 66) par exemple par l'unité inertielle UMI, et plus généralement par une centrale inertielle primaire.

Des écarts de composantes de champ $\delta H_{xm\_i}$, $\delta H_{yxm\_i}$, $\delta H_{zm\_i}$ sont obtenus, $i$ étant un indice d'itération.

Ensuite un vecteur Hcomp_i comportant des composantes $H_{Xcomp\_i}$, $H_{Ycomp\_i}$, $H_{Zcomp\_i}$ compensées est calculé et mémorisé à l'étape 68.

Le calcul de l'étape 68 met en œuvre une valeur de biais vertical estimé $\Delta Hz$ ainsi que des composantes estimées Kcxz, Kcyz de la matrice de compensation de fers doux Kc, ces composantes étant estimées à l'étape 70, suite à la mise en œuvre d'une étape d'estimation récursive 72.

L'estimation récursive 72 est une estimation de modèle au sol réinjecté dans une équation aux différences entre les deux composantes de champ mesurées (horizontale et verticale) et celles compensées du modèle identifié au sol, de façon à identifier en vol les paramètres complémentaires de défauts verticaux, dont le biais vertical de fer dur $\Delta Hz$ prépondérant.

L'estimation récursive 72 prend en entrée les écarts de composantes calculés à l'étape 64, ainsi qu'un critère d'observabilité, par exemple de type FOP (pour « Field of Precision »).

L'estimation récursive 72 prend en entrée les écarts de composantes calculés à l'étape 64, ainsi qu'un critère d'observabilité, par exemple de type calcul géométrique itératif combinant le cumul d'un écart d'angle solide en tangage/roulis et un écart d'angle de cap en proposant ainsi un concept de « Field Of Precision » dans le domaine du champ magnétique en un seul critère intégré.

Par exemple, un algorithme d'estimation par moindres carrés récursifs est mis en œuvre.

Le procédé comprend ensuite des étapes de projection horizontale 74 (analogue à l'étape 48 préalablement décrite) et de calcul de cap magnétique compensé (analogue à l'étape 76 préalablement décrite).

Ce procédé d'affinage présente un bon rapport signal à bruit d'estimation dans le domaine des composantes de champs champ, les équations numériques aux différences étant sans termes quadratiques ou de puissance plus élevées et bénéficie de plus d'une alimentation de l'algorithme uniquement lorsque le critère d'observabilité combiné détecte une observabilité suffisante par seuil prédéfini justifiable par la conjonction de variation suffisante de tangage, de roulis et de cap.

Avantageusement, la mise en œuvre d'un critère d'observabilité selon l'invention permet d'alimenter l'estimation de biais uniquement lors d'une phase d'observabilité appropriée, optimisant ainsi une estimation rapide en début de vol avec une meilleure qualité d'estimation.

## Revendications

1. Procédé de compensation de défauts magnétiques verticaux d'un magnétomètre (14) installé dans un aéronef (10), ledit magnétomètre étant associé à son repère de référence $X_M$, $Y_M$, $Z_M$ et l'aéronef étant associé à son repère d'aéronef $X_A$, $Y_A$, $Z_A$, ledit procédé, mis en œuvre par un processeur d'un dispositif électronique programmable, étant **caractérisé en ce qu'**il comporte :

   - une première étape (41) d'obtention de premières valeurs de coefficients de compensation de défauts magnétiques du magnétomètre, les coefficients de compensation correspondant aux angles d'Euler associés à une rotation pour passer du repère de référence du magnétomètre au repère d'aéronef,
   - une deuxième étape d'affinage comportant l'estimation d'au moins un coefficient de compensation des défauts magnétiques verticaux du magnétomètre, mise en œuvre dans une phase de vol lorsque l'attitude de l'aéronef s'éloigne de l'horizontale, la deuxième étape comprenant :

      - a) une acquisition (42) d'une pluralité de valeurs de vecteurs de champ magnétique mesurées par le magnétomètre en vol et de valeurs d'angles d'attitude de l'aéronef associés,
      - b) un calcul (50) d'un cap magnétique en fonction des premières valeurs de coefficients de compensation issues de la première étape et des valeurs de vecteur de champ magnétique acquises,
      - c) un calcul récursif (54) d'un coefficient, dit coefficient de pente, en fonction d'un écart de cap entre le cap magnétique calculé et un cap magnétique de référence, et de valeurs d'angles d'attitude de l'aéronef,

- d) un calcul (56) d'une valeur de coefficient de compensation de défauts magnétiques verticaux en utilisant un estimateur de biais vertical, mettant en œuvre le coefficient de pente calculé, les valeurs d'angles d'attitude de l'aéronef et des valeurs caractérisantes du champ magnétique terrestre local.

2. Procédé selon la revendication 1, dans lequel la première étape comporte une estimation au sol de premières valeurs de coefficients de compensation de défauts magnétiques horizontaux du magnétomètre.

3. Procédé selon la revendication 1, dans lequel la première étape comporte une estimation des premières valeurs de coefficients de compensation de défauts magnétiques par des coefficients de compensation génériques issus d'un modèle prédéfini de défauts magnétiques en fonction d'un type d'aéronef.

4. Procédé selon l'une des revendications 1 à 3, dans lequel le calcul récursif d'un coefficient de pente est un calcul par moindres carrés récursifs.

5. Procédé selon l'une quelconque des revendications 1 à 4, comportant en outre un calcul (46) de composantes de champ magnétique compensées à partir d'un vecteur de champ magnétique mesuré et des premières valeurs des coefficients de compensation de défauts magnétiques, préalablement au calcul de cap magnétique.

6. Procédé selon l'une des revendications 1 à 5, comportant en outre une étape de mise à jour (58) de composante verticale de champ magnétique compensée, en fonction de la valeur de coefficient de compensation de défauts magnétiques verticaux calculée.

7. Procédé selon la revendication 6, dans lequel les étapes a) à d) de la deuxième étape d'affinage sont itérées, et dans lequel la valeur de composante verticale de champ magnétique compensée est injectée à une itération suivante du procédé dans l'étape de calcul (46) de composantes de champ magnétique compensé.

8. Procédé selon la revendication 7, dans lequel le coefficient de pente est lié à l'écart de cap et aux valeurs d'angles d'attitude de l'aéronef par la formule :

$$\delta\psi\_i = \alpha\_i \cdot (\sin(\psi\_i)\sin(\theta\_i)\cos(\varphi\_i) - \cos(\psi_i)\sin(\varphi\_i))$$

Où i est un indice d'itération, $\alpha\_i$ est le coefficient de pente, $\delta_\psi$_i est l'écart de cap, $\varphi\_i$, $\theta\_i$, $\psi\_i$, sont les angles d'attitude de l'aéronef, respectivement de roulis, de tangage et de lacet.

9. Procédé selon la revendication 8, dans lequel un estimateur de biais vertical est calculé, pour l'itération d'indice i, selon la formule :

$$\Delta\hat{H}_{Z\_i} = \frac{-H_{0m_i} \cdot \cos(I\_i) \cdot \alpha\_i}{1 - \alpha\_i \cdot (\sin(\psi_i) \cdot \sin(\varphi_i) + \cos(\psi\_i) \cdot \sin(\theta\_i) \cdot \cos(\varphi\_i))}$$

Où $\Delta\hat{H}_{Z}$_i est ledit estimateur de biais vertical, $H_{0m}$_i est la norme du champ magnétique terrestre local mesuré, $I\_i$ est l'inclinaison du champ magnétique terrestre en radian, $\alpha\_i$ est le coefficient de pente et $\varphi\_i$, $\theta\_i$, $\psi\_i$, sont les angles d'attitude de l'aéronef, respectivement de roulis, de tangage et de lacet.

10. Procédé selon l'une quelconque des revendication 1 à 9, l'aéronef suivant une trajectoire dans la phase de vol, le procédé mettant en œuvre un critère géométrique d'observabilité combinant un cumul d'écart d'un angle solide en tangage et roulis et une variation de cap dans la trajectoire, la satisfaction dudit critère géométrique d'observabilité permettant de définir une condition de mise en œuvre en vol de l'estimation d'au moins un coefficient de compensation de défauts magnétiques verticaux dans une phase d'observabilité appropriée.

11. Programme d'ordinateur comportant des instructions logicielles qui, lorsqu'elles sont exécutées par un dispositif électronique programmable, mettent en œuvre un procédé de compensation des défauts magnétiques verticaux d'un magnétomètre conforme aux revendications 1 à 10.

12. Dispositif de compensation de défauts magnétiques verticaux d'un magnétomètre (14) installé dans un aéronef (10), ledit magnétomètre étant associé à son repère de référence $X_M$, $Y_M$, $Z_M$ et l'aéronef étant associé à son repère d'aéronef $X_A$, $Y_A$, $Z_A$, le dispositif comportant un processeur (24) caractérisé en qu'il est configuré pour mettre en œuvre :

- un module (26) d'obtention de premières valeurs de coefficients de compensation de défauts magnétiques du magnétomètre, les coefficients de compensation correspondant aux angles d'Euler associés à une rotation pour passer du repère de référence du magnétomètre au repère d'aéronef,
- un ensemble de modules, mis en œuvre dans une phase de vol lorsque l'attitude de l'aéronef s'éloigne de l'horizontale, configuré pour mettre en œuvre un affinage comportant l'estimation d'au moins un coefficient de compensation des défauts magnétiques verticaux du magnétomètre, comprenant :

un module d'acquisition (28) d'une pluralité de valeurs de vecteurs de champ magnétique mesurées par le magnétomètre en vol et de valeurs d'angles d'attitude de l'aéronef associés,
un module (30) de calcul d'un cap magnétique en fonction des premières valeurs de coefficients de compensation issues de la première étape et de valeurs de vecteur de champ magnétique acquises,
un module (32) de calcul récursif d'un coefficient, dit coefficient de pente, en fonction d'un écart de cap entre le cap magnétique calculé et un cap magnétique de référence, et de valeurs d'angles d'attitude de l'aéronef,
un module (34) de calcul d'une valeur de coefficient de compensation de défauts magnétiques verticaux en utilisant un estimateur de biais vertical, mettant en œuvre le coefficient de pente calculé, les valeurs d'angles d'attitude de l'aéronef et des valeurs caractérisantes du champ magnétique terrestre local.

**Patentansprüche**

1. Verfahren zur Kompensation von vertikalen magnetischen Fehlern eines Magnetometers (14), das in einem Luftfahrzeug (10) installiert ist, wobei das Magnetometer mit seinem Koordinatensystem $X_M$, $Y_M$, $Z_M$ assoziiert ist und das Luftfahrzeug mit seinem Luftfahrzeug-Koordinatensystem $X_A$, $Y_A$, $Z_A$ assoziiert ist, wobei das Verfahren, das von einem Prozessor einer programmierbaren elektronischen Vorrichtung durchgeführt wird, **dadurch gekennzeichnet ist, dass** es Folgendes umfasst:

- einen ersten Schritt (41) eines Erlangens erster Werte von Kompensationskoeffizienten für magnetische Fehler des Magnetometers, wobei die Kompensationskoeffizienten den Euler-Winkeln entsprechen, die mit einer Drehung assoziiert sind, um von dem Referenz-Koordinatensystem des Magnetometers zu dem Luftfahrzeug-Koordinatensystem zu wechseln,
- einen zweiten Verfeinerungsschritt, umfassend die Schätzung mindestens eines Kompensationskoeffizienten für vertikale magnetische Fehler des Magnetometers, der in einer Flugphase eingesetzt wird, wenn sich die Lage des Luftfahrzeugs von der Horizontalen entfernt, der zweite Schritt umfassend:

- a) eine Erfassung (42) einer Vielzahl von Werten von Magnetfeldvektoren, die von dem Magnetometer während des Fluges gemessen werden, und von Werten von assoziierten Fluglagewinkeln des Luftfahrzeugs,
- b) eine Berechnung (50) eines magnetischen Kurses abhängig von ersten Werten der Kompensationskoeffizienten aus dem ersten Schritt und den erfassten Werten des Magnetfeldvektors,
- c) eine rekursive Berechnung (54) eines Koeffizienten, bezeichnet als Neigungskoeffizient, abhängig von einer Kursabweichung zwischen dem berechneten magnetischen Kurs und einem magnetischen Referenzkurs, und von Werten der Lagewinkel des Luftfahrzeugs,
- d) eine Berechnung (56) eines Werts für einen vertikalen magnetischen Fehlerkompensationskoeffizienten unter Verwendung eines vertikalen Bias-Schätzers, der den berechneten Neigungskoeffizienten, die Werte der Lagewinkel des Luftfahrzeugs und charakterisierende Werte des lokalen Erdmagnetfelds implementiert.

2. Verfahren nach Anspruch 1, wobei der erste Schritt eine Schätzung am Boden von ersten Werten von Kompensationskoeffizienten für horizontale magnetische Fehler des Magnetometers umfasst.

3. Verfahren nach Anspruch 1, wobei der erste Schritt eine Schätzung der ersten Werte von Kompensationskoeffizienten für magnetische Fehler durch generische Kompensationskoeffizienten umfasst, die aus einem vordefinierten Modell magnetischer Fehler abhängig von einem Luftfahrzeugtyp abgeleitet sind.

4. Verfahren nach einem der Ansprüche 1 bis 3, wobei die rekursive Berechnung eines Steigungskoeffizienten eine rekursive Berechnung der kleinsten Quadrate ist.

5. Verfahren nach einem der Ansprüche 1 bis 4, ferner umfassend eine Berechnung (46) kompensierter Magnetfeldkomponenten aus einem gemessenen Magnetfeldvektor und ersten Werten von Koeffizienten zur Kompensation magnetischer Fehler vor der Berechnung des magnetischen Kurses.

6. Verfahren nach einem der Ansprüche 1 bis 5, ferner umfassend einen Schritt eines Aktualisierens (58) der kompensierten vertikalen Magnetfeldkomponente, basierend auf dem berechneten Wert des Kompensationskoeffizienten für vertikale magnetische Fehler.

7. Verfahren nach Anspruch 6, wobei die Schritte a) bis d) des zweiten Verfeinerungsschritts iteriert werden und wobei der Wert der kompensierten vertikalen Magnetfeldkomponente bei einer nächsten Iteration des Verfahrens in den Berechnungsschritt (46) für die kompensierte Magnetfeldkomponente eingespeist wird.

8. Verfahren nach Anspruch 7, wobei der Steigungskoeffizient mit der Kursabweichung und den Werten der Lagewinkel des Luftfahrzeugs durch die folgende Formel verbunden ist:

$$\delta\psi\_i = \alpha\_i \cdot (\sin(\psi\_i)\sin(\theta\_i)\cos(\varphi\_i) - \cos(\psi_i)\sin(\varphi\_i))$$

Wobei i ein Iterationsindex ist, $\alpha\_i$ der Steigungskoeffizient ist, $\delta\psi\_i$ die Kursabweichung ist, $\varphi$-i, $\theta\_i$, $\psi\_i$ die Lagewinkel des Luftfahrzeugs jeweils Roll-, Nick- und Gierwinkel, sind.

9. Verfahren nach Anspruch 8, wobei ein vertikaler Bias-Schätzer für die Iteration mit Index i gemäß der folgenden Formel berechnet wird:

$$\Delta\hat{H}_{Z\_i} = \frac{-H_{0m_i} \cdot \cos(I\_i) \cdot \alpha\_i}{1 - \alpha\_i \cdot (\sin(\psi_i) \cdot \sin(\varphi_i) + \cos(\psi\_i) \cdot \sin(\theta\_i) \cdot \cos(\varphi\_i))}$$

wobei $\Delta\hat{H}_{Z\_i}$ der genannte vertikale Bias-Schätzer ist, $H_{0m\_i}$ die Norm des gemessenen lokalen Erdmagnetfelds ist, $I\_i$ die Neigung des Erdmagnetfelds in Radiant ist, $\alpha\_i$ der Neigungskoeffizient ist und $\varphi$-i, $\theta\_i$, $\psi\_i$ die Lagewinkel des Luftfahrzeugs, Roll-, Nick- bzw. Gierwinkel, sind.

10. Verfahren nach einem der Ansprüche 1 bis 9, wobei das Luftfahrzeug in der Flugphase einer Flugbahn folgt, wobei das Verfahren ein geometrisches Kriterium der Beobachtbarkeit anwendet, das eine kumulierte Abweichung eines Raumwinkels bei Nick und Rollen und eine Kursänderung in der Flugbahn kombiniert, wobei die Erfüllung des geometrischen Kriteriums der Beobachtbarkeit es ermöglicht, eine Bedingung für die Anwendung der Schätzung mindestens eines Kompensationskoeffizienten für vertikale magnetische Fehler in einer geeigneten Phase der Beobachtbarkeit im Flug zu definieren.

11. Computerprogramm, umfassend Softwareanweisungen, die, wenn sie von einer programmierbaren elektronischen Vorrichtung ausgeführt werden, ein Verfahren zur Kompensation vertikaler magnetischer Fehler eines Magnetometers gemäß den Ansprüchen 1 bis 10 anwenden.

12. Vorrichtung zur Kompensation vertikaler magnetischer Fehler eines Magnetometers (14), das in einem Luftfahrzeug (10) installiert ist, wobei das Magnetometer mit seinem Koordinatensystem $X_M$, $Y_M$, $Z_M$ assoziiert ist und das Luftfahrzeug mit seinem Luftfahrzeug-Koordinatensystem $X_A$, $Y_A$, $Z_A$ assoziiert ist, die Vorrichtung umfassend einen Prozessor (24), **dadurch gekennzeichnet, dass** er konfiguriert ist, um Folgendes zu implementieren:

- ein Modul (26) zum Erlangen erster Werte von Kompensationskoeffizienten für magnetische Fehler des Magnetometers, wobei die Kompensationskoeffizienten den Euler-Winkeln entsprechen, die mit einer Drehung assoziiert sind, um von dem Referenz-Koordinatensystem des Magnetometers zu dem Luftfahrzeug-Koordinatensystem zu wechseln,
- eine Gruppe von Modulen, die in einer Flugphase eingesetzt wird, wenn sich die Lage des Luftfahrzeugs von der Horizontalen entfernt, und die konfiguriert ist, um eine Verfeinerung durchzuführen, die die Schätzung mindestens eines Kompensationskoeffizienten für die vertikalen magnetischen Fehler des Magnetometers umfasst, umfassend:

ein Erfassungsmodul (28) einer Vielzahl von Werten von Magnetfeldvektoren, die von dem Magnetometer während des Fluges gemessen werden, und von Werten von assoziierten Fluglagewinkeln des Luftfahrzeugs,

ein Modul (30) zur Berechnung eines magnetischen Kurses abhängig von ersten Werte der Kompensationskoeffizienten aus dem ersten Schritt und den erfassten Werten des Magnetfeldvektors,

ein Modul (32) zur rekursiven Berechnung eines Koeffizienten, bezeichnet als Neigungskoeffizient, abhängig von einer Kursabweichung zwischen dem berechneten magnetischen Kurs und einem magnetischen Referenzkurs, und von Werten der Lagewinkel des Luftfahrzeugs,

ein Modul (34) zur Berechnung eines Werts für einen vertikalen magnetischen Fehlerkompensationskoeffizienten unter Verwendung eines vertikalen Bias-Schätzers, der den berechneten Neigungskoeffizienten, die Werte der Lagewinkel des Luftfahrzeugs und charakterisierende Werte des lokalen Erdmagnetfelds implementiert.

## Claims

1. A method for compensating vertical magnetic anomalies of a magnetometer (14) installed in an aircraft (10), said magnetometer being associated with the coordinate frame $X_M$, $Y_M$, $Z_M$ thereof and the aircraft being associated with the aircraft coordinate frame $X_A$, $Y_A$, $Z_A$ thereof, said method, as implemented by a processor of a programmable electronic device, being **characterized in that** the method includes:

   - a first step (41) of obtaining first values of compensation coefficients for magnetic anomalies on the magnetometer, the compensation coefficients corresponding to the Euler angles associated with a rotation which changes from the reference coordinate frame of the magnetometer to the aircraft coordinate frame,
   - a second refining step including the estimation of at least one compensation coefficient for the magnetometer's vertical magnetic anomalies, implemented in a flight phase when the aircraft's attitude departs from the horizontal, the second step comprising:

      - a) an acquisition (42) of a plurality of values for the magnetic field vectors, as measured by the in-flight magnetometer and of values for associated aircraft attitude angles,
      - b) a calculation (50) of a magnetic heading as a function the first values for compensation coefficients from the first step and the acquired values for magnetic field vector,
      - c) a recursive calculation (54) of a coefficient, called the slope coefficient, as a function of a difference in heading between the calculated magnetic heading and a reference magnetic heading, and of values for aircraft attitude angles,
      - d) a calculation (56) of a value of a compensation coefficient for vertical magnetic anomalies, using a vertical bias estimator, using the calculated slope coefficient, aircraft attitude angle values and characterizing values of the local terrestrial magnetic field.

2. The method according to claim 1, wherein the first step includes an estimation on the ground of first values of compensations coefficients for horizontal magnetic anomalies of the magnetometer.

3. The method according to claim 1, wherein the first step includes an estimation of the first values of compensation coefficients for magnetic anomalies by generic compensation coefficients coming from a predefined model of magnetic anomalies depending on the type of aircraft.

4. The method according to one of claims 1 to 3, wherein the recursive calculation of a slope coefficient is a calculation using recursive least squares.

5. The method according to any of claims 1 to 4, further including a calculation (46) of compensated magnetic field components from a measured magnetic field vector and the first values of the compensation coefficients for magnetic anomalies prior to the calculation of the magnetic heading.

6. The method according to one of claims 1 to 5, further including a step of updating (58) the vertical component of the compensated magnetic field, as a function of the calculated value of compensation coefficient for vertical magnetic anomalies.

7. The method according to claim 6, wherein steps a) to d) of the second refining step, are iterated, and wherein the value of compensated magnetic field vertical component is fed into a subsequent iteration of the method in the calculation step (46) for the compensated magnetic field component.

8. The method according to claim 7, wherein the slope coefficient is related to the heading deviation and to the attitude angle values of the aircraft, by the formula:

$$\delta\psi\_i = \alpha\_i \cdot (\sin(\psi\_i)\sin(\theta\_i)\cos(\varphi\_i) - \cos(\psi_i)\sin(\varphi\_i))$$

where i is an iteration index, $\alpha\_i$ is the slope coefficient, $\delta\psi\_i$ is the heading deviation, $\varphi\_I$, $\theta\_i$, $\psi\_i$, are the aircraft attitude angles of roll, pitch and yaw, respectively.

9. The method according to claim 8, wherein a vertical bias estimator is calculated, for the iteration of index i, according to the formula:

$$\Delta\widehat{H}_{Z\_i} = \frac{-H_{0m_i} \cdot \cos(I\_i) \cdot \alpha\_i}{1 - \alpha\_i \cdot (\sin(\psi_i) \cdot \sin(\varphi_i) + \cos(\psi\_i) \cdot \sin(\theta\_i) \cdot \cos(\varphi\_i))}$$

where $\Delta\widehat{H}_{Z\_i}$ is said vertical bias estimator, $H_{0m\_i}$ is the norm of the measured local terrestrial magnetic field, $I\_i$ is the inclination of the terrestrial magnetic field in radians, $\alpha\_i$ is the slope coefficient and $\varphi\_i$, $\theta\_I$, $\psi\_I$, are the aircraft attitude angles of roll, pitch and yaw, respectively.

10. The method according to any of claims 1 to 9, the aircraft following a trajectory in the flight phase, the method implementing a geometric observability criterion combining a cumulative deviation of a solid pitch and roll angle and a heading change in the trajectory, satisfying said geometric observability criterion making it possible to define a condition of implementation in-flight of the estimation of at least one compensation coefficient for vertical magnetic anomalies in an appropriate observability phase.

11. A computer program including software instructions which, when executed by a programmable electronic system, implement a method for compensating vertical magnetic anomalies of a magnetometer according to claims 1 to 10.

12. A device for compensating vertical magnetic anomalies of a magnetometer (14) installed in an aircraft (10), said magnetometer being associated with the reference coordinate frame $X_M$, $Y_M$, $Z_M$ thereof and the aircraft being associated with the aircraft coordinate frame $X_A$, $Y_A$, $Z_A$ thereof, the device comprising a processor (24) **characterized in that** same is configured for implementing:

- a module (26) for obtaining first values of compensation coefficients for magnetometer magnetic anomalies, the compensation coefficients corresponding to the Euler angles associated with a rotation for changing from the reference coordinate frame of the magnetometer to the aircraft coordinate frame,
- a set of modules, implemented in a flight phase when the aircraft's attitude departs from the horizontal, configured for implementing a refinement which includes the estimation of at least one compensation coefficient for the magnetometer's vertical magnetic anomalies, comprising:

  a module (28) for acquiring a plurality of magnetic field vector values measured by the magnetometer in-flight and associated aircraft attitude angle values,
  a module (30) for calculating a magnetic heading as a function of the first values of compensation coefficients from the first step and acquired magnetic field vector values,
  a module (32) for the recursive calculation of a coefficient, called the slope coefficient, as a function of a difference in heading between the calculated magnetic heading and a reference magnetic heading, and of values for aircraft attitude angles,
  a module (34) for calculating a value of compensation coefficient for vertical magnetic anomalies using a vertical bias estimator, using the calculated slope coefficient, aircraft attitude angle values and characterizing values of the local terrestrial magnetic field.

**FIG.1**

## FIG.2

FIG.3

$(H_{xm}, H_{ym}, H_{zm})$ — 60

66 — $(\psi, \theta, \phi)$ — 72

62 — $(hx, hy, hz)$ $K_C, B_C$

64 — Calcul écarts composantes champ

72 — Estimation récursive

68 — $H_{comp}$

70 — Valeurs éstimées

74 — Projection HORZ

76 — Cap magnétique compensé

FIG.4

**EP 4 230 958 B1**

## RÉFÉRENCES CITÉES DANS LA DESCRIPTION

**Documents brevets cités dans la description**

- FR 3094082 B1